Europäisches Patentamt

European Patent Office

Office européen des brevets

(11) Veröffentlichungsnummer: **0 471 369 A2**

# EUROPÄISCHE PATENTANMELDUNG

(21) Anmeldenummer: **91113690.1**

(22) Anmeldetag: **14.08.91**

(51) Int. Cl.⁵: **H04N 1/04**, H04N 1/18

(30) Priorität: **15.08.90 SU 4852976**

(43) Veröffentlichungstag der Anmeldung:
**19.02.92 Patentblatt 92/08**

(84) Benannte Vertragsstaaten:
**AT BE CH ES FR GB IT LI NL SE**

(71) Anmelder: **MEZHDUNARODNY TSENTR PO INFORMATIKE I ELEKTRONIKE**
**Presnensky Val 19**
**123557 Moskau(SU)**

(72) Erfinder: **Farobin, Nikita Yaroslavovitch**
**Vorotnikovskij per, d.7, Kv.48**
**103006 Moskau(SU)**
Erfinder: **Ivanova, Yelena Petrovna**
**Litovskij b-r d., 5/10 Kv. 370**
**117588 Moskau(SU)**
Erfinder: **Pyshkin, Igor Michailovitch**
**u. Udaltsova d., 20, Kv. 66**
**117454 Moskau(SU)**

(74) Vertreter: **Ebbinghaus, Dieter et al**
**v. FÜNER, EBBINGHAUS, FINCK**
**Patentanwälte European Patent Attorneys**
**Mariahilfplatz 2 & 3**
**W-8000 München 90(DE)**

(54) **Vorrichtung zum Abtasten von Bildern.**

(57) Eine optische Vorrichtung zum Abtasten von Bildern enthält einen auf dem Wagen eines mechanischen Druckers befestigten fotoelektrischen Wandler (1), dessen Ausgang über eine Schnittstelle (8) des Druckers an eine Verarbeitungsschaltung angeschlossen ist. Sie zeichnet sich aus durch eine an den Ausgang des fotoelektrischen Wandlers (1) angeschlossene Reihenschaltung aus einem Anpassungsblock (2), einem Verstärker (3) und einem Analog/Digital-Wandler (4) und durch einen ersten Umschalter (5) und einen Schalter (6) zum Abschalten des entsprechenden Druckkopfhammers, wobei die Ausgänge des Umschalters (5) mit Klemmen der Schnittstelle (8) des Druckers zur Übertragung des Zustandes des Druckers verbunden sind, eine erste Gruppe der Schalteingänge des Umschalters (5) mit den Leitungen zur Übertragung des Zustandes des Druckers verbunden ist und eine zweite Gruppe der Schalteingänge des Umschalters (5) an die entsprechenden Ausgänge des Analog/Digital-Wandlers (4) angeschlossen ist, dessen Steuereingang mit der Klemme STROB der Schnittstelle (8) des Druckers in Verbindung steht, wobei die Klemme SELECT der Schnittstelle (8) des Druckers an die Leitung zur Steuerung des ersten Umschalters (5) und an die Leitung zur Steuerung des Schalters (6) zum Abschalten des entsprechenden Druckkopfhammers angeschlossen ist, dessen Synchronisationsausgang an den entsprechenden Eingang der zweiten Gruppe der Schalteingänge des Umschalters (5) angeschlossen ist und die Schaltklemmen des Schalters (6) zum Abschalten des entsprechenden Druckkopfhammers in die Leitung zur Übertragung des Stromschritts vom Druckers zu dem entsprechenden Hammer geschaltet sind.

Die Vorrichtung kann ohne Umrüstung zwischen Lese- und Druckbetrieb hin- und hergeschaltet werden.

FIG. 1

Die Erfindung bezieht sich auf eine Vorrichtung zum Abtasten von Bildern, mit einem auf dem wagen eines mechanischen Druckers befestigten photoelektrischen Wandler, dessen Ausgang über eine Schnittstelle des Druckers an eine Verarbeitungsschaltung angeschlossen ist.

Eine solche Vorrichtung ist aus der DE-A-2 320 962 bekannt. Sie dient dazu, von auf dem wagen des Druckers befestigten Datenträgern in Form eines nach einem bestimmten Code gelochten Blattes Programme in eine Datenverarbeitungsmaschine einzulesen. Nicht möglich ist es mit der bekannten Vorrichtung, Bilder, hauptsächlich aber alphanumerische Texte von einem Blatt zur Weiterverarbeitung in einen Rechner einzulesen.

Dies ist möglich mit einer Vorrichtung der aus der GB-A 2 152 326 bekannten Art, die jedoch den Nachteil hat, daß sie vom Druck- in den Lesebetrieb oder umgekehrt umgerüstet werden muß. Es ist nicht möglich, vom Druck- in den Lesebetrieb oder umgekehrt umzuschalten.

Der Erfindung liegt daher die Aufgabe zugrunde, eine optische Vorrichtung zum Abtasten von Bilder zu schaffen, die ohne Umrüstung, also Austausch des Druckkopfes gegen den Lesekopf oder umgekehrt, und ohne weitere schaltungstechnische Maßnahmen aus dem Druck- in den Lesebetrieb oder umgekehrt umgeschaltet werden kann.

Diese Aufgabe wird ausgehend von der eingangs beschriebenen, gattungsgemäßen Vorrichtung erfindungsgemäß durch die Merkmale des kennzeichnenden Teils des Anspruchs 1 gelöst.

Bevorzugte Weiterbildungen und Ausgestaltungen sind Gegenstand der Patentansprüche 2 bis 6, wobei ein photoelektrischer Wandler der im Patentanspruch 2 beschriebenen Art aus der DE-A-116 095 und Einzelheiten der Schaltung gemäß Patentanspruch 1 aus der DE-A-3 236 058 zu entnehmen sind, jedoch nichts hinsichtlich der Ansteuerung mittels bestimmter Impulse.

Die wesentlichen Vorteile der erfindungsgemäßen Vorrichtung sind die einfache Herstellung und die niedrigen Kosten sowie die Möglichkeit der Ein- und Ausgabe von Informationen mit Hilfe ein und desselben Geräts. Bei entsprechender Programmierung lassen sich die Abtastbereiche vorgeben und je nach den Ergebnissen der Analyse der im vorangegangenen Arbeitsschritt eingegebenen Information ändern. Dabei können gleichzeitig mehrere Lichtsender und -empfänger verwendet werden. Die erfindungsgemäße Vorrichtung läßt es nicht nur zu, alphanumerische Texte in einen Rechner einzulesen, sondern ermöglicht auch die Eingabe von Bildern und Diagrammen, die mittels eines Selbstschreibers oder durch Aufzeichnung auf Fotopapier erhalten wurden.

Die Erfindung wird anhand des in der Zeichnung dargestellten Ausführungsbeispiels näher erläutert. Es zeigen:

Fig. 1    ein Blockschaltbild einer erfindungsgemäßen Vorrichtung,

Fig. 2    einen Querschnitt des fotoelektrischen Wandlers,

Fig. 3    die schematische Darstellung eines Druckers, an dessen Wagen ein fotoelektrischer Wandler befestigt ist,

Fig. 4    das Schaltbild einer erfindungsgemäßen Vorrichtung mit n photoelektrischen Wandlern und

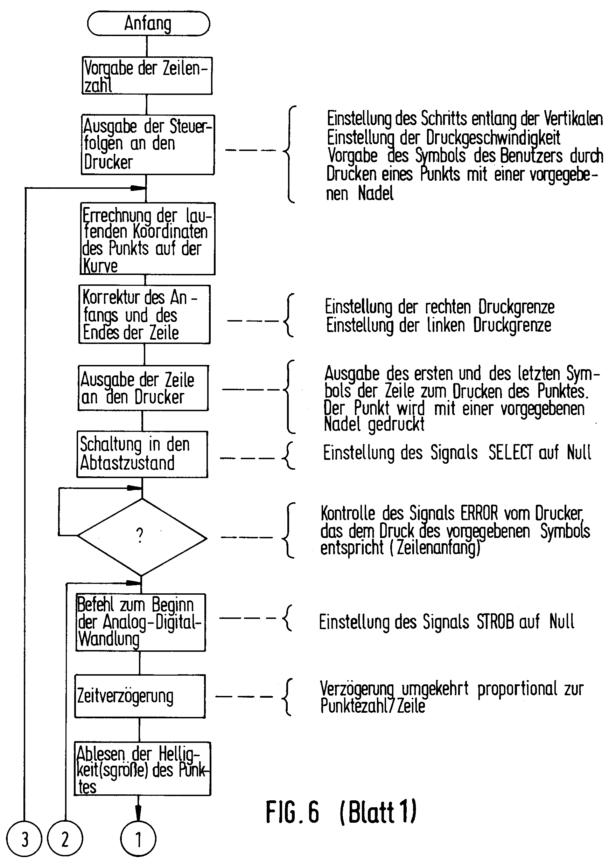

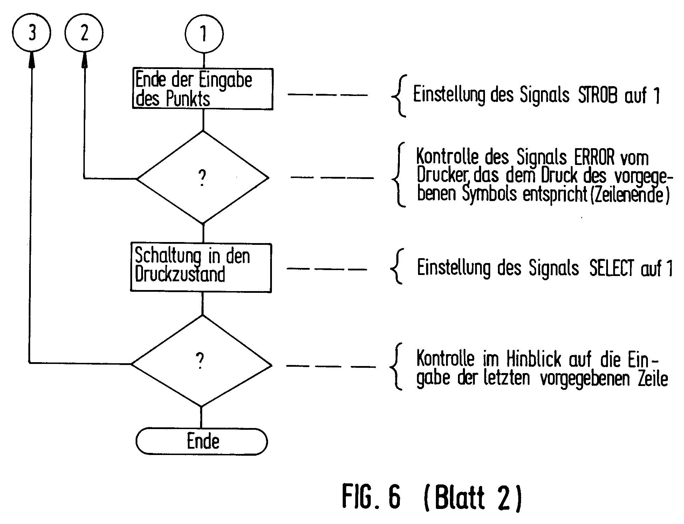

Fig. 5    und Fig. 6 Programmablaufpläne, wobei das Programm nach Fig. 6 eine Verstellung des Arbeitsbereiches ermöglicht.

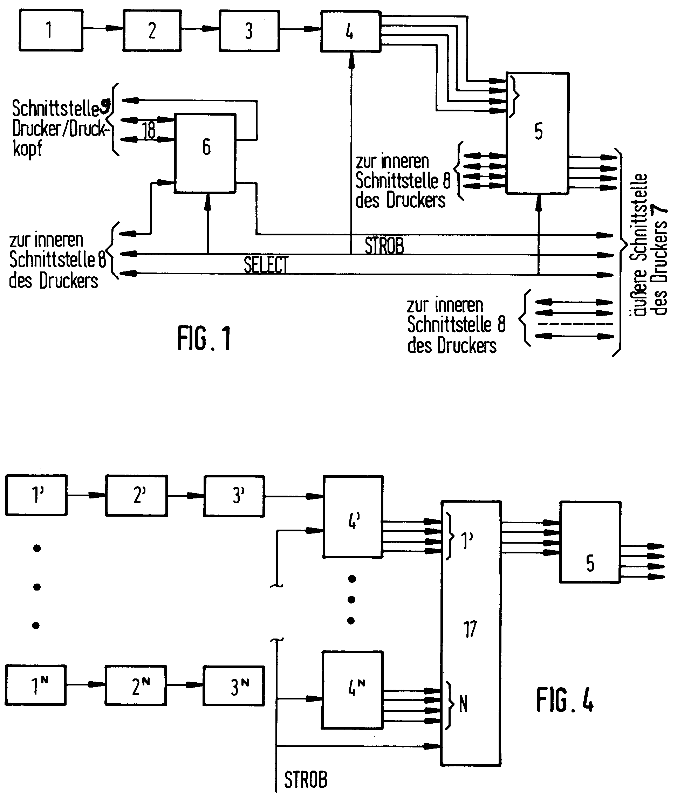

Die Vorrichtung umfaßt gemäß Fig. 1 einen fotoelektrischen Wandler 1, einen Anpassungsblock oder Vorverstärker 2, einen Verstärker 3, einen Analog/Digital-Wandler 4, einen ersten Umschalter 5, einen Schalter 6 zum Abschalten des entsprechenden Druckkopfhammers, eine Schnittstelle 7 der Drucker, eine innere Schnittstelle 8 des Druckers und eine Schnittstelle 9 des Druckkopfes 10.

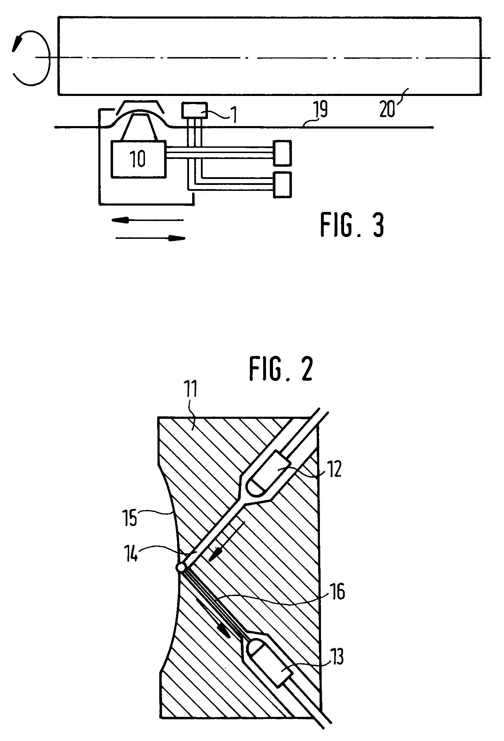

Der Wandler 1 ist gemäß Fig. 2 in Form eines Gehäuses 11 ausgebildet, in dem ein Lichtsender 12 und ein Lichtempfänger 13 angeordnet sind. Der Sender 12 ist über einen Kanal 14 mit der Arbeitsfläche 15 des Gehäuses 11 verbunden. Der Empfänger 13 ist mit der gleichen Arbeitsfläche 15 über einen Lichtleiter 16 verbunden.

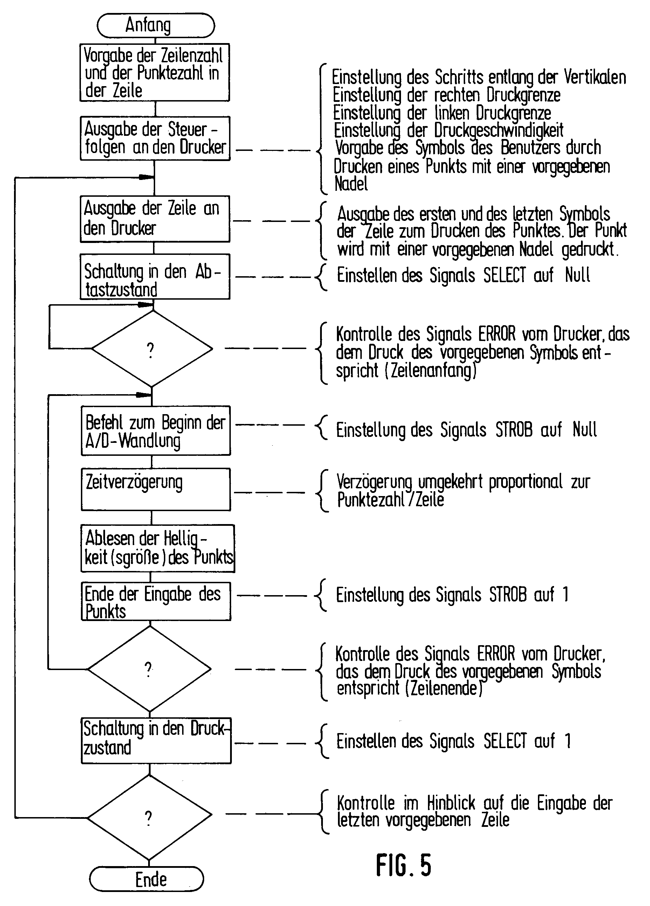

Ein zweiter Schaltblock 17 (Fig. 4) hat, wenn die Vorrichtung mit n Kanälen arbeitet, N umschaltbare Eingänge; sein Ausgang ist mit der zweiten Gruppe der Eingänge des ersten Umschalters 5 verbunden.

Der Ausgang des Wandlers 1 (in einem beliebigen Kanal) ist an den Eingang des Anpassungsblocks 2, beispielsweise eines hochohmigen Verstärkers auf der Basis eines Operationsverstärkers angeschlossen. Der Ausgang des Anpassungsblocks 2 ist über den Verstärker 3, beispielsweise einen Operationsverstärker mit Niveauverschiebung mit dem entsprechenden Eingang des Analog/Digital-Wandlers 4 verbunden. Die Niveauverschiebung ist für die normale Funktion des Analog/Digital-Wandlers 4 erforderlich.

Diejenigen Klemmen der Schnittstelle 7, die den Leitungen zur Übertragung des Zustandes entsprechen, sind mit den Ausgängen des Schalters 5 verbunden. Die restlichen Klemmen der Schnittstelle 7 sind unmittelbar an die Klemmen der Schnittstelle 8 des Druckers angeschlossen. Die Klemme "Wahl" ("SELECT") der Schnittstelle 7 ist mit der Steuerleitung des Schalters 5 und mit der Steuerleitung des Schalters 6 verbunden, dessen Ausgang an den entsprechenden Eingang des Schalters 5 angeschlossen ist und über den das erzeugte Zeilenanfangssignal übertragen wird. Die Klemme "Strob" ("STROBE") der Schnittstelle 7 ist an den Steuerausgang des Analog/Digital-Wandlers 4 angeschlossen. Der Block 6 ist mit seinem Schalteingang und seinem Ausgang in eine Leitung 18 geschaltet, die vom Drucker dem entsprechenden Hammer des Druckkopfes 10 einen Stromimpuls zuführt. Ein Druckband 19 umschließt den Seitenteil und den hinteren Teil des Gehäuses des fotoelektrischen Wandlers 1, der in unmittelbarer Nähe einer Trommel 20 des Druckers angeordnet ist.

Die Vorrichtung arbeitet folgendermaßen: Der fotoelektrische Wandler 1 wird am Wagen des Druckkopfes 10 angeordnet. Die Außenmaße des fotoelektrischen Wandlers 1 erlauben es, ihn ständig zu verwenden, da zu dessen Anordnung das Druckband 19 nicht abgenommen werden muß und da das Gehäuse des Wandlers als Führung für das Druckband 19 verwendet werden kann. Bei Anordnung von N Wandlern werden N Druckköpfe 10 verwendet. Es können jedoch auch N Wandler 1 an einem Spezialhalter angeordnet werden, der mit einem Wagen verbunden ist.

In der Ausgangsstellung befindet sich die Einrichtung im Druckzustand, wobei über die Schnittstelle 7 nach einem Standardprotokoll parallel zur Schnittstelle ein Befehl zum Ausdrucken einer Zeile mit einem vorgegebenen Symbol am Anfang und am Ende der Zeile erteilt wird, das durch Einschalten desselben vorher gewählten Hammers des Druckkopfes 10 erhalten wird. Danach wird über die Schnittstelle 7 programmgemäß das Signal "Wahl" ("SELECT") abgegeben, das eine Umschaltung der Vorrichtung in den Abtastzustand bewirkt, wobei das Signal "Wahl" ("SELECT") den vorher gewählten Hammer des Druckkopfes 10 abschaltet und den Schaltblock 5 in den Zustand schaltet, in dem seine Ausgänge mit den Ausgängen des Analog/Digital-Wandlers 4 verbunden sind. Dabei wird das Steuerprogramm in den Zustand geschaltet, in dem es auf das Erscheinen des Signals "Zeilenanfang" wartet, das beim Erscheinen des Stromabschnitts in der Leitung 18 erzeugt wird. Danach wird über die Schnittstelle 7 das Signal "Strob" ("STROBE") abgegeben (dessen Frequenz programmgemäß vorgegeben wird), das auf den Steuereingang des Analog/Digital-Wandlers 4 gelangt und den Befehl zum Beginn der Analog-Digital-Wandlung erteilt. Nach Beendigung jedes Analog-Digital-Wandlungsprozesses erfolgt eine Kontrolle im Hinblick auf das Erscheinen des Signals "Zeilenende", das beim Erscheinen des Stromschritts in der Leitung 18 erzeugt wird. Nach Beendigung der Eingabe der Zeile, über die der Wagen mit dem Umformer 1 gelaufen ist, erfolgt die Umschaltung der Einrichtung in den Druckzustand durch Übertragung des Signals "Wahl" ("SELECT") über die Schnittstelle 7, was einem Rücklauf zum Standardprotokoll der Schnittstelle entspricht. Danach wird der Zyklus mit dem Befehl zum Ausdrucken einer Zeile wiederholt, der von einer automatischen Verschiebung des Informationsträgers um eine Stellung durch die Trommel 20 begleitet wird (was der Standard für einen Drucker ist).

**Patentansprüche**

1.  Optische Vorrichtung zum Abtasten von Bildern, mit einem auf dem Wagen eines mechanischen Druckers befestigten fotoelektrischen Wandler (1), dessen Ausgang über eine Schnittstelle (8) des Druckers an eine Verarbeitungsschaltung angeschlossen ist, **gekennzeichnet** durch eine an den Ausgang des fotoelektrischen Wandlers (1) angeschlossene Reihenschaltung aus einem Anpassungsblock (2), einem Verstärker (3) und einem Analog/Digital-Wandler (4) und durch einen ersten Umschalter (5) und einen Schalter (6) zum Abschalten des entsprechenden Druckkopfhammers, wobei die Ausgänge des Umschalters (5) mit Klemmen der Schnittstelle (8) des Druckers zur Übertragung des Zustandes des Druckers verbunden sind, eine erste Gruppe der Schalteingänge des Umschalters (5) mit den Leitungen zur Übertragung des Zustandes des Druckers verbunden ist und eine zweite Gruppe der Schalteingänge des Umschalters (5) an die entsprechenden Ausgänge des Analog/Digital-Wandlers (4) angeschlossen ist, dessen Steuereingang mit der Klemme STROB der Schnittstelle (8) des Druckers in Verbindung steht, wobei die Klemme SELECT der Schnittstelle (8) des Druckers an die Leitung zur Steuerung des ersten Umschalters (5) und an die Leitung zur Steuerung des Schalters (6) zum Abschalten des entsprechenden Druckkopfhammers angeschlossen ist, dessen Synchronisationsausgang an den entsprechenden Eingang der zweiten Gruppe der Schalteingänge des Umschalters (5) angeschlossen ist und die Schaltklemmen des Schalters (6) zum Abschalten des entsprechenden Druckkopfhammers in die Leitung zur Übertragung des Stromschritts vom Druckers zu dem entsprechenden Hammer geschaltet sind.

2.  Vorrichtung nach Anspruch 1, dadurch **gekennzeichnet**, daß der fotoelektrische Wandler (1) in Form eines Lichtsenders (12) und eines Lichtempfängers (13) ausgebildet ist, die unter einem Winkel zueinander in einem Gehäuse (11) angeordnet sind, daß der Lichtsender (12) über einen Kanal (14) mit der Arbeitsfläche (15) des fotoelektrischen Wandlers (1) in Verbindung steht und daß im Bereich der Ausgangsöffnung des Kanals (14) der Eingangsteil eines Lichtleiters (16) angeordnet ist, dessen Ausgangsteil mit dem Lichtempfänger (13) verbunden ist.

3. Vorrichtung nach Anspruch 1, dadurch **gekennzeichnet,** daß der Seitenteil und der hintere Teil des Gehäuses (11) des fotoelektrischen Wandlers (1) in Form von Führungen für das Druckband (19) des Druckers ausgebildet sind.

4. Vorrichtung nach Anspruch 1, dadurch **gekennzeichnet**, daß der Verstärker (3) mit der Möglichkeit einer Signalniveauverschiebung ausgebildet ist.

5. Vorrichtung nach Anspruch 1, dadurch **gekennzeichnet**, daß sie mit n-1 Kanälen versehen ist, von denen jeder eine Reihenschaltung aus einem fotoelektrischen Wandler, einem Anpassungsblock, einem Verstärker und einem Analog/Digital-Wandler enthält, und daß sie mit einem zweiten Umschalter mit n Gruppen von Schalteingängen versehen ist, wobei die Ausgänge aller Analog/Digital-Wandler an die entsprechende Gruppe der Schalteingänge des zweiten Umschalters angeschlossen sind, dessen Ausgänge mit der zweiten Gruppe der Schalteingänge des ersten Umschalters verbunden sind, und wobei die Steuereingänge aller Analog/Digital-Wandler miteinander und mit dem Steuereingang des zweiten Umschalters verbunden sind.

Schnittstelle **9**
Drucker/Druck-
kopf

zur inneren
Schnittstelle 8
des Druckers

zur inneren
Schnittstelle 8
des Druckers

STROB

SELECT

zur inneren
Schnittstelle 8
des Druckers

äußere Schnittstelle
des Druckers **7**

FIG. 1

STROB

FIG. 4

FIG. 3

FIG. 2

```
        ┌──────────────┐
        │    Anfang    │
        └──────────────┘
                │
   ┌─────────────────────────┐
   │ Vorgabe der Zeilenzahl  │
   │ und der Punktezahl in   │
   │ der Zeile               │
   └─────────────────────────┘
                │
   ┌─────────────────────────┐        ┌ Einstellung des Schritts entlang der Vertikalen
   │ Ausgabe der Steuer-     │        │ Einstellung der rechten Druckgrenze
   │ folgen an den Drucker   │ ── ── ─┤ Einstellung der linken Druckgrenze
   └─────────────────────────┘        │ Einstellung der Druckgeschwindigkeit
                │                      │ Vorgabe des Symbols des Benutzers durch
                │                      │ Drucken eines Punkts mit einer vorgegebenen
                │                      └ Nadel
   ┌─────────────────────────┐        ┌ Ausgabe des ersten und des letzten Symbols
   │ Ausgabe der Zeile an    │ ── ── ─┤ der Zeile zum Drucken des Punktes. Der Punkt
   │ den Drucker             │        └ wird mit einer vorgegebenen Nadel gedruckt.
   └─────────────────────────┘
                │
   ┌─────────────────────────┐
   │ Schaltung in den Ab-    │ ── ── ─{ Einstellen des Signals SELECT auf Null
   │ tastzustand             │
   └─────────────────────────┘
                │
          ◇─────────◇                 ┌ Kontrolle des Signals ERROR vom Drucker, das
          │    ?    │ ── ── ── ──────┤ dem Druck des vorgegebenen Symbols ent-
          ◇─────────◇                 └ spricht (Zeilenanfang)
                │
   ┌─────────────────────────┐
   │ Befehl zum Beginn der   │ ── ── ─{ Einstellung des Signals STROB auf Null
   │ A/D-Wandlung            │
   └─────────────────────────┘
                │
   ┌─────────────────────────┐        ┌ Verzögerung umgekehrt proportional zur
   │ Zeitverzögerung         │ ── ── ─┤ Punktezahl/Zeile
   └─────────────────────────┘        └
                │
   ┌─────────────────────────┐
   │ Ablesen der Hellig-     │
   │ keit (sgröße) des Punkts│
   └─────────────────────────┘
                │
   ┌─────────────────────────┐
   │ Ende der Eingabe des    │ ── ── ─{ Einstellung des Signals STROB auf 1
   │ Punkts                  │
   └─────────────────────────┘
                │
          ◇─────────◇                 ┌ Kontrolle des Signals ERROR vom Drucker,
          │    ?    │ ── ── ── ──────┤ das dem Druck des vorgegebenen Symbols
          ◇─────────◇                 └ entspricht (Zeilenende)
                │
   ┌─────────────────────────┐
   │ Schaltung in den Druck- │ ── ── ─{ Einstellen des Signals SELECT auf 1
   │ zustand                 │
   └─────────────────────────┘
                │
          ◇─────────◇                 ┌ Kontrolle im Hinblick auf die Eingabe der
          │    ?    │ ── ── ── ──────┤ letzten vorgegebenen Zeile
          ◇─────────◇                 └
                │
        ┌──────────────┐
        │     Ende     │
        └──────────────┘
```

## FIG. 5

7

Anfang

Vorgabe der Zeilenzahl

Ausgabe der Steuerfolgen an den
Drucker
— — — { Einstellung des Schritts entlang der Vertikalen
Einstellung der Druckgeschwindigkeit
Vorgabe des Symbols des Benutzers durch
Drucken eines Punkts mit einer vorgegebenen Nadel

Errechnung der laufenden Koordinaten
des Punkts auf der
Kurve

Korrektur des Anfangs und des
Endes der Zeile
— — — { Einstellung der rechten Druckgrenze
Einstellung der linken Druckgrenze

Ausgabe der Zeile
an den Drucker
— — — { Ausgabe des ersten und des letzten Symbols der Zeile zum Drucken des Punktes.
Der Punkt wird mit einer vorgegebenen
Nadel gedruckt

Schaltung in den
Abtastzustand
— — — { Einstellung des Signals SELECT auf Null

? — — — { Kontrolle des Signals ERROR vom Drucker,
das dem Druck des vorgegebenen Symbols
entspricht (Zeilenanfang)

Befehl zum Beginn
der Analog-Digital-
Wandlung
— — — { Einstellung des Signals STROB auf Null

Zeitverzögerung
— — — { Verzögerung umgekehrt proportional zur
Punktezahl/Zeile

Ablesen der Hellig-
keit(sgröße) des Punktes

(3) (2) (1)

## FIG. 6 (Blatt 1)

FIG. 6 (Blatt 2)

Ende der Eingabe des Punkts — — — { Einstellung des Signals STROB auf 1

? — — — { Kontrolle des Signals ERROR vom Drucker, das dem Druck des vorgegebenen Symbols entspricht (Zeilenende)

Schaltung in den Druckzustand — — — { Einstellung des Signals SELECT auf 1

? — — — { Kontrolle im Hinblick auf die Eingabe der letzten vorgegebenen Zeile

Ende